# EUROPEAN PATENT APPLICATION

(11) **EP 2 587 290 A1**
(43) Date of publication of application: **01.05.2013**
(21) Application number: 11798208.2
(22) Date of filing: 23.06.2011
(51) Int. Cl.: G02B 6/38

(54) **OPTICAL CONNECTOR**

(30) Priority: 23.06.2010 JP 2010142758
(71) Applicant: Yazaki Corporation, Minato-ku Tokyo 108-8333 (JP)
(72) Inventor: HIKOSAKA Tomohiro, Susono-shi Shzuoka (JP); IKEYA Kenichi, Susono-shi Shzuoka (JP)
(74) Representative: Grünecker, Kinkeldey, Stockmair & Schwanhäusser
(86) International application number: PCT/JP2011/064368
(87) International publication number: WO 2011/162327

(57) **Abstract**

Disclosed is an optical connector which has excellent assembling workability. Specifically disclosed is an optical connector (11) which is connected to an end portion of an optical fiber cable (12) that is obtained by covering an optical fiber strand (15) with a covering part (16) that has a tensile strength fiber (18). The optical connector (11) comprises: a ferrule (61) that is affixed to an end portion of the optical fiber strand (15) exposed from the covering part (16); a crimping sleeve (71) through which the optical fiber strand (15) passes and to which the covering part (16) is affixed; and a housing (21) in which the ferrule (61) and the crimping sleeve (71) are held. The housing (21) has a recessed container part (24d) that is provided with an opening in a lateral surface, and the crimping sleeve (71) has a flange portion (74) which can be contained in the recessed container part (24d) by being slid thereinto from the lateral side of the housing (21).

## Description

### <TECHNICAL FIELD>

The present invention relates to an optical connector used in connection between optical fibers in, for example, a LAN for an automobile.

### <BACKGROUND ART>

Recently, in order to suppress increase in the number of circuit and to reduce noise, a wire harness including an optical fiber cable which is partially covered with an optical fiber has been used for an automobile.

The wire harness including the optical fiber cable has a configuration that an optical connector is connected to a terminal of the optical fiber cable (see, Patent Document 1, for example).

In the conventional optical connector, a plug frame holding a ferrule which is fixed to optical fiber strands drawn out from the optical fiber cable is accommodated in a housing and a stop ring fixing a tensile strength fiber of the optical fiber cable and an outer skin is connected to the plug frame by a crimping ring.

### <PRIOR ART DOCUMENT>

### <PATENT DOCUMENT>

Patent Document 1: JP-A-2010-26475

### <SUMMARY OF THE INVENTION>

### <PROBLEMS THAT THE INVENTION IS TO SOLVE>

However, in the above-described optical connector, it is necessary to perform a complicated assembling work that the ferrule fixed to the optical fiber strands is mounted to the plug frame, the stop ring fixing the tensile strength fiber of the optical fiber cable and the outer skin is assembled to the plug frame and then the plug frame is accommodated into the housing.

Accordingly, a great deal of effort is expended to perform a detachment work and an assembling work when the ferrule to which the optical fiber strands are connected is recombined into the plug frame and the housing which constitutes another optical fiber connector for repairing the optical connector or replacing the optical connector with different type of connector.

The present invention has been made to solve the above-described problems and an object of the present invention is to provide an optical connector having an excellent assembling workability.

### <MEANS FOR SOLVING THE PROBLEM>

In order to achieve the above-described object, the optical connector according to the present invention is characterized by the following (1) to (3).
(1) An optical connector is connected to an end portion of an optical fiber cable that is obtained by covering optical fiber strands with a covering part that has a tensile strength material, the optical connector includes:
   a ferrule which is fixed to an end portion of the optical fiber strands exposed from the covering part,
   a sleeve through which the optical fiber strands pass and to which the covering part is fixed and,
   a housing in which the ferrule and the sleeve are held and,
   the housing includes a receiving part which is opened at a lateral side and the sleeve includes a flange portion which can be accommodated in the receiving part by being slid thereinto from the lateral side of the housing.
(2) In the optical connector of the above configuration (1), the covering part is fixed to the sleeve by covering an outer periphery of the sleeve with an end of the covering part and fitting a ring thereon and the sleeve is provided at its outer peripheral surface with irregularities.
(3) In the optical connector of the above configuration (1) or (2), the sleeve is provided with an insertion through-hole through which the optical fiber strands pass and the insertion through-hole has a diameter which is gradually enlarged toward the insertion direction of the optical fiber strands.

According to the optical connector of the above configuration (1), since the flange portion of the sleeve is slid and accommodated into the receiving part from the lateral side of the housing, the sleeve to which the covering part is fixed can be very easily fixed to the housing and thus it is possible to significantly improve the assembling workability.
By doing so, even in a case where the housing is replaced and repaired due to damage of the housing or the ferrule assembly is recombined to other different type of housing, it is possible to easily detach the ferrule assembly from the housing and to assemble the ferrule assembly to new housing.
According to the optical connector of the above configuration (2), since the irregularities are formed at the outer periphery of the sleeve, the irregularities serve as a slippage prevention part when the ring is fitted onto the sleeve. In this way, it is possible to firmly fix the covering part which has the tensile strength fiber to the sleeve.
According to the optical connector of the above configuration (3), since the insertion through-hole of the sleeve through which the optical fiber strands pass has a diameter which is gradually enlarged toward the insertion direction of the optical fiber strands, the optical fiber strands can be smoothly bent toward the ferrules in the insertion through-hole, even if the ferrules are placed at a position offset from the axis of the sleeve in the housing. In this way, the optical fiber strands are not sharply bent and thus increase in transmission loss can be suppressed. Further, since the optical fiber strands are smoothly bent toward the ferrules in the insertion through-hole, it is possible to minimize the distance between the sleeve and the ferrules, even in a structure where the ferrules are placed at a position offset from the axis of the sleeve. As a result, the compactness of the housing can be achieved.

Hereinabove, the present invention has been described briefly. In addition, the detailed configurations of the present invention will be clarified by reading through the mode for carrying out the invention as described below, with reference to the accompanying drawings.

### <BRIEF DESCRIPTION OF THE DRAWINGS>

FIG. 1 is a perspective view of an optical connector according to an illustrative embodiment of the present invention.
FIG. 2 is an exploded perspective view of the optical connector shown in FIG. 1.
FIG. 3 is an exploded side view of the optical connector shown in FIG. 1.
FIG. 4 is a cross-sectional plan view of the optical connector shown in FIG. 1.
FIG. 5 is a perspective view of a crimping sleeve shown in FIG. 4.
FIG. 6 is a cross-sectional view of the crimping sleeve shown in FIG. 4.
FIG. 7 is an exploded perspective view of the optical connector according to another embodiment of the present invention.
FIG. 8 (a) and FIG. 8 (b) are views for explaining a process of assembling the optical connector, respectively showing a side view of the optical connector during assembling.
FIG. 9 is a perspective view of an optical connector according to a reference example.
FIG. 10 is an exploded perspective view of the optical connector according to the reference example shown in FIG. 9.

### <BEST MODE FOR CARRYING OUT THE INVENTION>

Hereinafter, an example of an illustrative embodiment according to the present invention will be described with reference to the accompanying drawings.

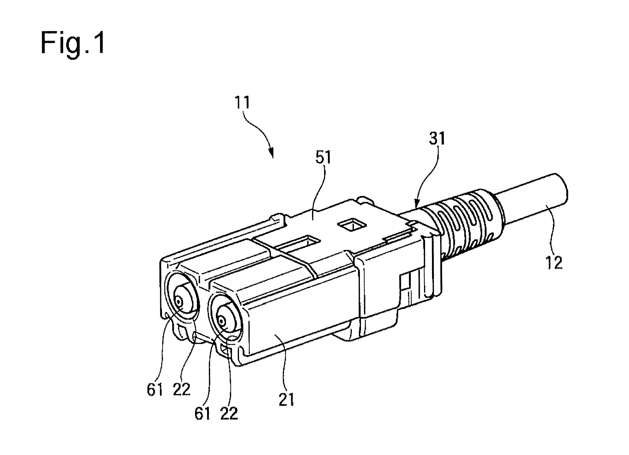

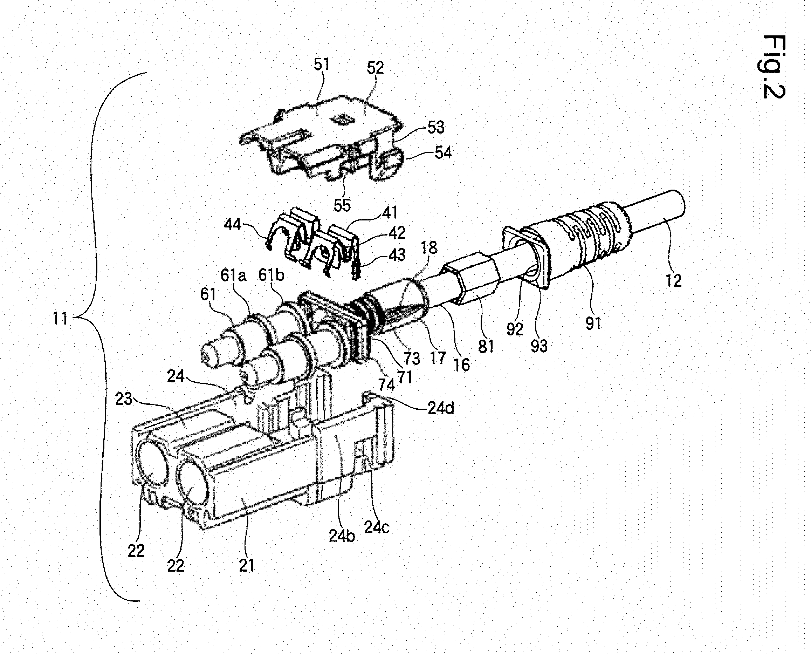

As shown in FIGS. 1 and 2, an optical connector 11 according to an illustrative embodiment of the present invention is a male connector which is mounted on a leading end of an optical fiber cable 12. The optical connector 11 is fitted and connected to a female optical connector which is a mating connector.

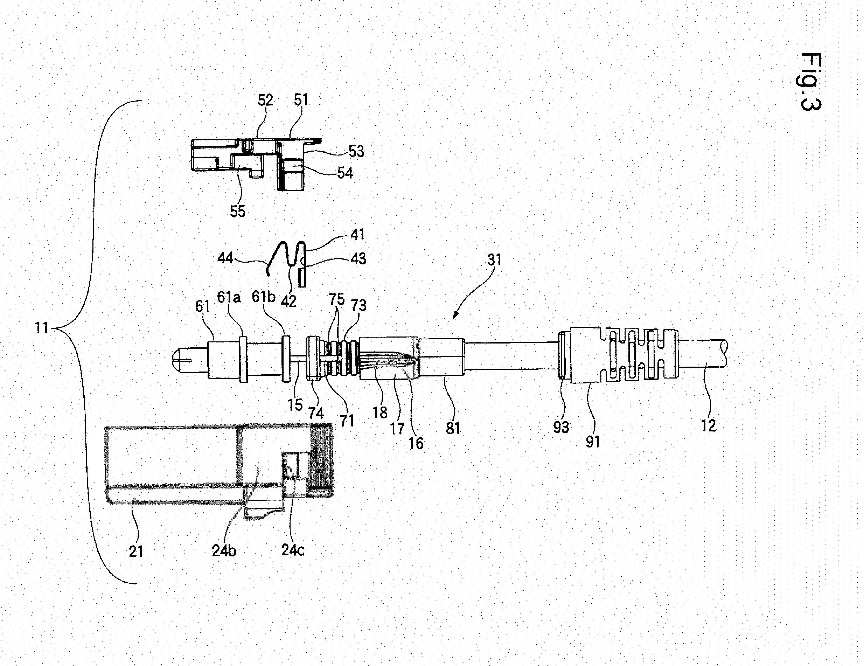

As also shown in FIG. 3, the optical connector 11 includes a housing 21, a ferrule assembly 31 which is provided at a leading end of the optical fiber cable 12 and accommodated in the housing 21, a leaf spring member 41 mounted to the housing 21 and a retainer 51 assembled to the housing 21.

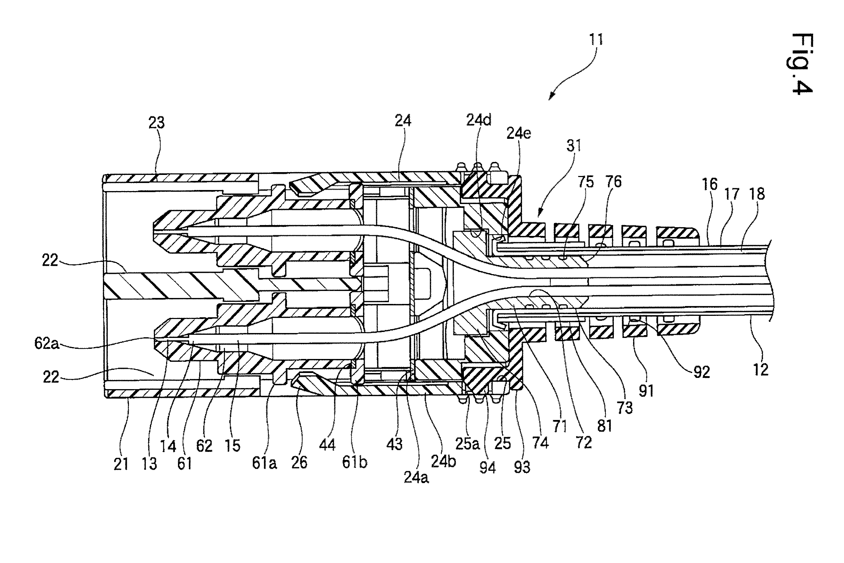

The housing 21 is molded from a synthetic resin such as plastic. As shown in FIG. 4, a leading end side of the housing is a ferrule mounting part 23 which is provided with a pair of through-holes 22 penetrating in a front-rear direction. Ferrules 61 constituting the ferrule assembly 31 are inserted thorough theses through-holes 22 from the rear side.

Further, the housing 21 is provided at its rear end side with a component mounting part 24 which is opened at an upper side as one side, that is, a lateral side of the housing 21. The leaf spring member 41 is mounted to the component mounting part 24.

The leaf spring member 41 is formed from spring steel and includes a connection part 42 which is formed in a waveform as seen from a side view. One end of the connection part 42 of the leaf spring member 41 is a support piece portion 43 and the other end of the connection part 42 is a biased piece portion 44.

The leaf spring member 41 thus configured is mounted to the component mounting part 24 of the housing 21 on which the ferrules 61 are mounted. Then, the leaf spring member 41 is disposed between a wall portion 24a formed at the component mounting part 24 of the housing 21 and the ferrules 61. The support piece portion 43 is brought into contact with the wall portion 24a and the biased piece portion 44 is brought into contact with a rear end of the ferrules 61. In this way, the ferrules 61 are held at the housing 21 in a state of being biased toward a leading end of the housing 21 by the leaf spring member 41.

Accordingly, as the optical connector 11 is connected to the mating optical connector, the ferrules 61 of the optical connector 11 and the ferrules of the mating optical connector are biased and brought into contact with each other and thus a good optical connection state is achieved.

The retainer 51 which is assembled to the component mounting part 24 of the housing 21 is molded from a synthetic resin such as plastic. The retainer 51 includes a pressing plate portion 52 which has substantially the same outer shape as an opening portion of the component mounting part 24 and locking pieces 53 formed at both sides of the pressing plate portion 52. The locking pieces 53 are projected toward a mounting direction to the component mounting part 24 of the housing 21. Each of the locking pieces 53 is formed with a locking claw 54 projecting outward.

As the retainer 51 thus configured is assembled to the component mounting part 24 of the housing 21, the component mounting part 24 of the housing 21 is closed by the pressing plate portion 52. Further, at this time, the locking claws 54 of the locking pieces 53 are engaged with the edge of locking holes 24c which are formed at both side walls 24b of the housing 21. As a result, the retainer 51 is securely assembled to the housing 21.

A surface of the retainer 51 at a side of the mounting direction to the component mounting part 24 serves as a holding portion 55 to hold the leaf spring member 41. Accordingly, the retainer 51 can be attached and detached from the component mounting part 24 of the housing 21 in a state where the leaf spring member 41 is held at the holding portion 55.

The optical fiber cable 12 having the ferrule assembly 31 at its leading end includes two optical fiber strands 15 which are obtained by covering a glass fiber 13 consisting of a core and a clad with an outer skin 14. These two optical fiber strands 15 are covered with the covering part 16. The covering part 16 has a configuration that a tensile strength fiber (tensile strength material) 18 such as an aramid fiber, for example, is provided inside a covering layer 17 formed from resin.

And, the optical fiber cable 12 is subjected to a terminal processing and thus the optical fiber strands 15 are exposed from the covering part 16.

The ferrule assembly 31 provided at the leading end of the optical fiber cable 12 includes the ferrules 61, a crimping sleeve (sleeve) 71, a crimping ring (ring) 81 and a boot 91.

The ferrules 61 are formed from a metal such as brass and a fiber insertion through-hole 62 is formed at the center of the ferrule. The optical fiber strands 15 exposed from the covering part 16 are inserted though the fiber insertion through-hole 62 from the rear end side. A leading end side of the fiber insertion through-hole 62 is serves as a glass fiber holding hole portion 62a. The glass fiber 13 exposed from the outer skin 14 of the optical fiber strands 15 is inserted into the glass fiber holding hole portion 62a and then fixed thereto by an adhesive, etc.

Flanges 61 a, 61 b are formed at the middle and rear end of the ferrules 61 in a longitudinal direction. And, as the ferrules 61 are inserted through the though-hole 22 formed at the ferrule mounting part 23 of the housing 21, a holding protrusion 26 formed at the housing 21 enters between the flanges 61 a, 61 b of the ferrules 61, so that the ferrules 61 are held in a state being inserted into the though-hole 22.

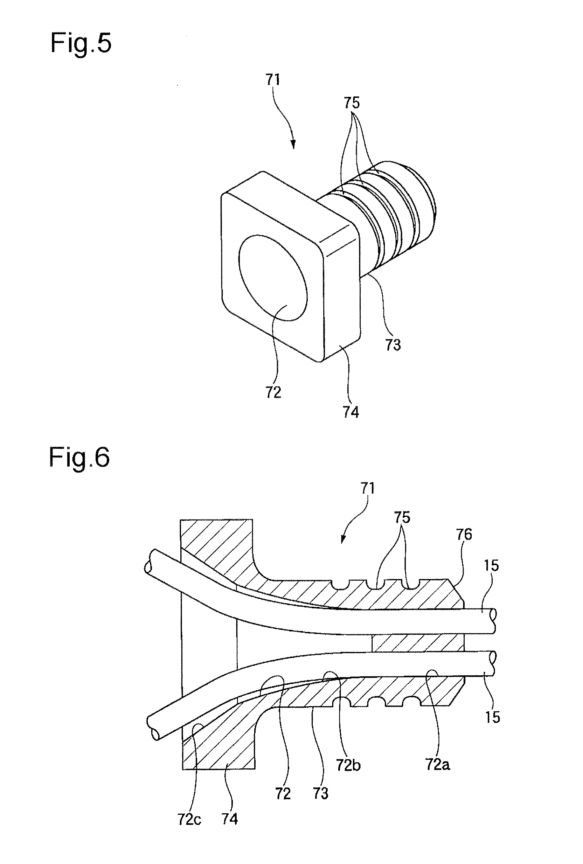

As shown in FIGS. 5 and 6, the crimping sleeve 71 includes a cylindrical sleeve portion 73 which is provided at its center with an insertion through-hole 72 and a flange portion 74 which is formed at a leading end side of the sleeve portion 73. The flange portion 74 has a rectangular shape as seen from a plan view.

The flange portion 74 of the crimping sleeve 71 is accommodated into a recessed receiving part (receiving part) 24d formed at the component mounting part 24 of the housing 21 from the upper side of the housing 21 which is an opening side of the component mounting part 24. The housing 21 is formed at its rear end with a hole portion 24e which is communicated with the component mounting part 24. The sleeve potion 73 of the crimping sleeve 71 in a state where the flange portion 74 is accommodated into the recessed receiving part 24d is projected from the hole portion 24e to the rear of the housing 21.

The optical fiber strands 15 exposed from the covering part 16 are inserted through the insertion through-hole 72 of the sleeve portion 73 of the crimping sleeve 71 from the rear end side. The insertion through-hole 72 has a diameter which is gradually enlarged from the vicinity of the rear end toward a leading end of the optical fiber strands 15 in an insertion direction. Specifically, the insertion through-hole 72 includes a same diameter hole section 72a in a range from the rear end to the vicinity of the rear end, a first diameter enlarged hole section 72b in a range from the vicinity of the rear end to the vicinity of the leading end and a second diameter enlarged hole section 72c in a range from the vicinity of the leading end to the leading end. The same diameter hole section 72a has the same diameter. The first diameter enlarged hole section 72b has a diameter which is gently enlarged. The second diameter enlarged hole section 72c has a diameter which is enlarged at a proportion rapider than the first diameter enlarged hole section 72b. Accordingly, as the optical fiber strands 15 inserted through the insertion through-hole 72 are bent outward in a radial direction, the optical fiber strands 15 are bent outward in the radial direction along the first diameter enlarged hole section 72b and also bent outward in the radial direction along the second diameter enlarged hole section 72c. In this way, the optical fiber strands 15 can be smoothly bent outward in the radial direction in a stepwise manner within the insertion through-hole 72.

At an outer peripheral surface of the sleeve portion 73 of the crimping sleeve 71, a plurality of engaging grooves 75 are formed along the circumferential direction at intervals in an axial direction. Accordingly, irregularities consisting of the plurality of engaging grooves 75 are formed at an outer peripheral surface of the sleeve portion 73. Further, a chamfered portion 76 is formed at an outer peripheral side edge of a rear end of the sleeve portion 73.

An outer periphery of the sleeve portion 73 of the crimping sleeve 71 is covered with the covering part 16 which consists of the tensile strength fiber 18 and the cover layer 17 of the optical fiber cable 12.

A cylindrical crimping ring 81 is fitted onto the sleeve portion 73. An end of the covering part 16 which consists of the tensile strength fiber 18 and the cover layer 17 of the optical fiber cable 12 and is covering the sleeve portion 73 is sandwiched and fixed between the sleeve portion 73 and the crimping ring 81.

The boot 91 is, for example, formed from an elastic resin material such as rubber and is provided with a cable insertion through-hole 92. Further, engaging pieces 93 are projected from both sides of one end of the boot 91. These engaging pieces 93 are formed with engaging claws 94 projecting outward.

The optical fiber cable 12 is inserted through the cable insertion through-hole 92 of the boot 91. Further, the engaging pieces 93 of the boot 91 are inserted into engaging holes 25 which are formed at a rear end surface of the housing 21. The engaging claws 94 are engaged with engaging windows 25a which are formed at a side of the engaging holes 25. Therefore, the boot 91 is fixed to a rear end of the housing 21 and covers and protects the optical fiber cable 12 which is drawn out from the rear end of the housing 21. In this way, an excessive bending is prevented.

The ferrule assembly 31 having the above-described structure may be mounted to a housing which constitutes other different type of optical connector.

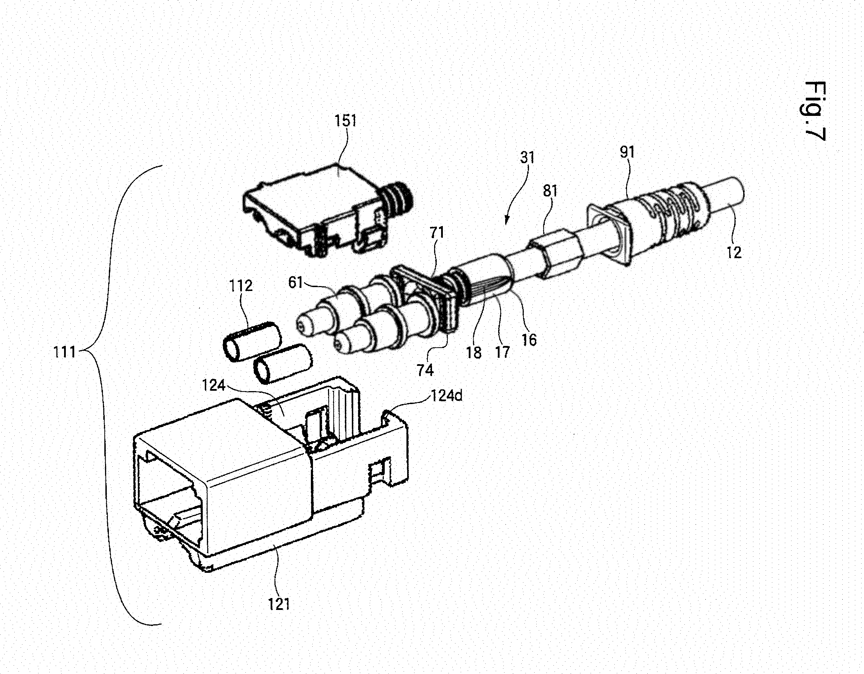

FIG. 7 shows an optical connector 111 made of a relay connector. Also in this optical connector 111, a component mounting part 124 is formed at a housing 121 thereof. Further, a retainer 151 can be attached and detached from the component mounting part 124.

The ferrules 61 of the ferrule assembly 31 are equipped at its leading end with split sleeves 112 and accommodated into the housing 121 through the component mounting part 124. Further, the component mounting part 124 of the housing 121 is also provided with a recessed receiving part 124d which is opened at a lateral side. The flange portion 74 of the crimping sleeve 71 constituting the ferrule assembly 31 is slid and accommodated into the recessed receiving part and thus held in the housing 121.

In this way, the ferrule assembly 31 can be easily assembled to a housing of various optical connectors since the ferrule assembly is common for various different types of optical connector such as a PCB board connector without being limited to the above-described relay connector.

Next, a case of assembling the optical connector 11 is described.

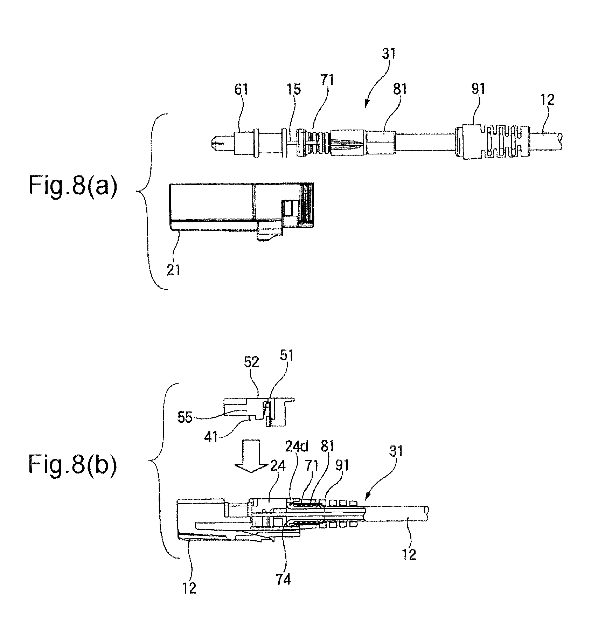

First, in order to assemble the ferrule assembly 31, as shown in FIG. 8 (a), the boot 91, the crimping ring 81 and the crimping sleeve 71 are previously inserted along the optical fiber cable 12 and the optical fiber strands 15 are fixed to the ferrules 61 by an adhesive, etc. and then the leading end surface of the ferrules 61 is polished.

Next, the sleeve portion 73 of the crimping sleeve 71 is covered with an end of the covering part 16 and the crimping ring 81 is fitted onto the sleeve portion 73.

Here, at the outer peripheral surface of the sleeve portion 73 of the crimping sleeve 71, the plurality of engaging grooves 75 are formed along the circumferential direction at intervals in the axial direction and therefore irregularities are formed. Accordingly, when the crimping ring 81 is fitted onto the sleeve portion 73, the irregularities consisting of the plurality of engaging grooves 75 serve to prevent slippage of the covering part 16 which consists of the cover layer 17 and the tensile strength fiber 18. In this way, it is possible to firmly fix the covering part 16 to the crimping sleeve 71.

After the ferrule assembly 31 is assembled as mentioned above, the ferrule assembly 31 is assembled to the housing 21. Specifically, the ferrules 61 are inserted through the though-hole 22 formed at the ferrule mounting part 23 of the housing 21 and the flange portion 74 of the crimping sleeve 71 is slid and accommodated into the recessed receiving part 24d formed at the component mounting part 24 of the housing 21 from the lateral side which is an upper side of the housing 21. In this way, as the flange portion 74 of the crimping sleeve 71 is slid and accommodated into the recessed receiving part 24d of the housing 21, the crimping sleeve 71 to which the covering part 16 of the optical fiber cable 12 is fixed can be very easily fixed to the housing 21. Further, since the flange portion 74 of the crimping sleeve 71 has a rectangular shape as seen from a plan view and thus secures a large area, the crimping sleeve can be fixed to the housing 21 with a large fixed intensity.

Here, since the ferrules 61 inserted through the though-hole 22 of the ferrule mounting part 23 are spaced apart from each other in the housing 21, each of the ferrules 61 is disposed at a position offset from the axis of the crimping sleeve 71. Accordingly, the optical fiber strands 15 drawn out from the covering part 16 are spaced apart from each other toward the end and thus bent. In this case, when the distance between the crimping sleeve 71 and the ferrules 61 is short, the optical fiber strands 15 are sharply bent and thus increase in transmission loss is caused. However, since the crimping sleeve 71 of the present embodiment is configured in such a way that the insertion through-hole 72 of the sleeve portion 73 has a diameter which is gradually enlarged toward the insertion direction of the optical fiber strands 15, the optical fiber strands 15 can be smoothly bent outward in the radial direction in the insertion through-hole 72 (see, FIG. 6). Accordingly, even when the distance between the crimping sleeve 71 and the ferrules 61 is short, the optical fiber strands 15 are not sharply bent and thus increase in transmission loss is suppressed. For example, in a case where each of the optical fiber strands 15 is a plastic-clad-silica (PCS) fiber which includes a core made of quartz glass and a clad made of resin, a bending radius thereof can be reduced below R9 which is an allowable bending radius.

After the crimping sleeve 71 is mounted, the boot 91 is moved toward the housing 21 and thus the engaging pieces 93 of the boot are inserted into the engaging holes 25 of the housing 21. And then, the engaging claws 94 are engaged with the engaging windows 25a and therefore the boot is fixed to a rear end of the housing 21 (see, FIG. 4).

In this way, when the ferrule assembly 31 is assembled to the housing 21, the retainer 51 whose holding portion 55 holds the leaf spring member 41 is assembled to the component mounting part 24 of the housing 21 from the upper side thereof, as shown in FIG. 8 (a). Then, the locking claws 54 of the locking pieces 53 of the retainer 51 are engaged with the edge of locking holes 24c of both side walls 24b of the housing 21 and thus the retainer 51 is securely assembled to the housing 21. And, the component mounting part 24 of the housing 21 is closed by the pressing plate portion 52 of the retainer 51 and thus detachment of the leaf spring member 41, the ferrules 61 and the crimping sleeve 71 from the component mounting part 24 is prevented.

Further, the leaf spring member 41 is disposed between the wall portion 24a of the component mounting part 24 and the ferrules 61, the support piece portion 43 is brought into contact with the wall portion 24a and the biased piece portion 44 is brought into contact with the rear end of the ferrules 61. In this way, the ferrules 61 are biased toward the leading end of the housing 21 by the leaf spring member 41.

Here, in a case where the housing 21 is replaced and repaired due to damage or the ferrule assembly is recombined to the housing 121 of the optical connector 111 such as the above-described relay connector, the ferrule assembly 31 is detached from the housing 21. In this case, first, the engagement with the locking claws 54 of the retainer 51 is released, the retainer 51 is detached together with the leaf spring member 41 from the housing 21 and thus the boot 91 is detached from the housing 21. And then, the crimping sleeve 71 is slid and pulled upward from the housing 21. In this way, the flange portion 74 is withdrawn from the recessed receiving part 24d and the ferrules 61 are withdrawn from the through-hole 22 of the ferrule mounting part 23.

Hereinabove, as described above, the optical connector according to the present embodiment has a configuration that the housing 21 is formed with the recessed receiving part 24d which is opened at the lateral side and the crimping sleeve 71 is formed with the flange portion 74 which can be slid and accommodated into the recessed receiving part 24d. Accordingly, since the flange portion 74 of the crimping sleeve 71 is slid and accommodated into the recessed receiving part 24d from the lateral side of the housing 21, the crimping sleeve 71 to which the covering part 16 is fixed can be very easily fixed to the housing 21 and thus it is possible to significantly improve the assembling workability.

By doing so, even in a case where the housing 21 is replaced and repaired due to damage of the housing 21 or the ferrule assembly is recombined to other different type of housing 121, it is possible to easily detach the ferrule assembly from the housing 21 and to assemble the ferrule assembly to new housing 21, 121.

Further, since the irregularities consisting of the plurality of engaging grooves 75 are formed at the outer peripheral surface of the sleeve portion 73 of the crimping sleeve 71, the irregularities serve as a slippage prevention part when the crimping ring 81 is fitted onto the sleeve portion. In this way, it is possible to firmly fix the covering part 16 which has the cover layer 17 and the tensile strength fiber 18 to the crimping sleeve 71.

Further, since the insertion through-hole 72 of the crimping sleeve 71 through which the optical fiber strands 15 pass has a diameter which is gradually enlarged toward the insertion direction of the optical fiber strands 15, the optical fiber strands 15 can be smoothly bent toward the ferrules 61 in the insertion through-hole 72, even if the ferrules 61 are placed at a position offset from the axis of the crimping sleeve 71 in the housing 21. In this way, the optical fiber strands 15 are not sharply bent and thus increase in transmission loss can be suppressed. Further, since the optical fiber strands 15 are smoothly bent toward the ferrules 61 in the insertion through-hole 72, it is possible to minimize the distance between the crimping sleeve 71 and the ferrules 61, even in a structure where the ferrules 61 are placed at a position offset from the axis of the crimping sleeve 71. As a result, the compactness of the housing 21 can be achieved.

In addition, although the flange portion 74 of the crimping sleeve 71 has a rectangular shape as seen from a plan view in the foregoing embodiment, the shape of the flange portion 74 as seen from the plan view is not limited to the rectangular shape, but may be a circular shape, etc. In particular, when the flange portion 74 has the circular shape, the size of the flange portion 74 is reduced and thus the compactness of the crimping sleeve 71 and the housing 21 can be achieved.

Further, although the irregularities consisting of the plurality of engaging grooves 75 are formed at the outer peripheral surface of the sleeve portion 73 of the crimping sleeve 71 in the foregoing embodiment, a plurality of protrusions may be formed or a plurality of holes may be formed, for example.
Further, the insertion through-hole 72 of the crimping sleeve 71 may have a diameter which is enlarged in a curved shape as seen from a cross-sectional view.

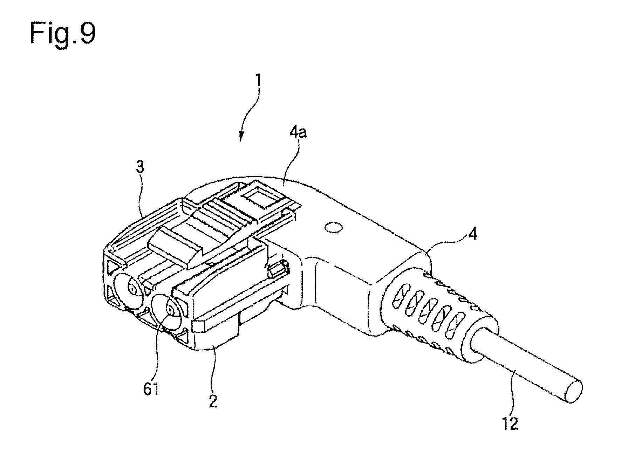

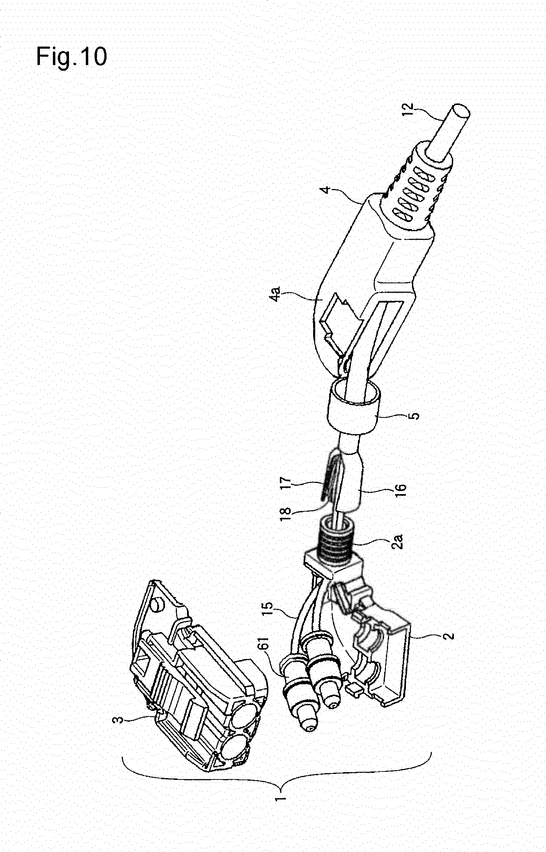

Now, in order to explain the advantages of the present invention, a reference example is described with reference to FIGS. 9 and 10.

FIG. 9 is a perspective view of an optical connector according to a reference example and FIG. 10 is an exploded perspective view of the optical connector according to the reference example.

As shown in FIGS. 9 and 10, the optical connector 1 according to the reference example includes a lower housing 2, an upper housing 3 and a boot 4. The upper housing 3 is integrally mounted to the lower housing 2 to cover the lower housing in which the ferrule 61 is accommodated. The lower housing 2 is formed integrally with a cylindrical crimping sleeve 2a through which the optical fiber strands 15 is inserted. A crimping ring 5 is fitted onto the crimping sleeve 2a in a state of being covered with the covering part 16 of the optical fiber cable 12. The boot 4 is formed with a cover portion 4a. A portion of the lower housing 2 and the upper housing 3 which are integrated is covered with the cover portion 4a.

In this optical connector 1, the lower housing 2 is formed integrally with the crimping sleeve 2a. Accordingly, when it is necessary to replace the lower housing 2 for repairing the lower housing or for employing different type of connector, for example, a detachment work is required as follows. First, the crimping ring 5 is removed and thus the covering part 16 is detached from the crimping sleeve 2a. And then, the ferrules 61 are detached from the optical fiber strands 15 and thus the optical fiber strands 15 are detached from the crimping sleeve 2a. In addition, after that, an assembling work is performed in such a way that the optical fiber strands 15 are inserted through the crimping sleeve 2a of new lower housing 2 and then the ferrules 61 are fixed, and the crimping sleeve 2a is covered with the covering part 16 and fixed by fitting the crimping ring 5 thereon.
That is, according to the optical connector 1 having the above-described structure, a very complicated detachment work and assembling work are required for the replacement of the lower housing 2.

Although the optical connector of the present invention has been explained in detail with reference to the particular embodiment, the present invention is not limited to each of the above-described embodiments and various modifications and alternations may be made. Further, the material, shape and dimensions of each component constituting the optical connector of the present invention may be arbitrarily selected as long as the object of the present invention can be achieved and are not limited to each of the above-described embodiments.
This application is based upon Japanese Patent Application (Patent Application No. 2010-142758) filed on June 23, 2010 and the entire contents of which are incorporated herein by reference.

### <INDUSTRIAL APPLICABILITY>

According to the present invention, it is possible to provide the optical connector which has an excellent assembling workability. Accordingly, even in a case where the housing is replaced and repaired or the ferrule assembly is recombined to other different type of housing, it is possible to easily detach the ferrule assembly from the housing and to assemble the ferrule assembly to new housing.

### <EXPLANATION OF DESIGNATION>

### [Explanation of Reference Numeral]

- 11, 111: Optical connector
- 12: Optical fiber cable
- 15: Optical fiber strand
- 16: Covering part
- 18: Tensile strength fiber (Tensile strength material)
- 21, 121: Housing
- 24d, 124d: Recessed receiving part (Receiving part)
- 61: Ferrule
- 71: Crimping sleeve (Sleeve)
- 72: Insertion through-hole
- 74: Flange portion
- 75: Engagement groove
- 81: Crimping ring (Ring)

## Claims

1. An optical connector connected to an end portion of an optical fiber cable that is obtained by covering an optical fiber strand with a covering part that has a tensile strength material, the optical connector comprising:
a ferrule fixed to an end portion of the optical fiber strand exposed from the covering part,
a sleeve through which the optical fiber strand pass and to which the covering part is fixed and,
a housing in which the ferrule and the sleeve are held,
wherein the housing includes a receiving part opened at a lateral side and the sleeve includes a flange portion which can be accommodated in the receiving part by being slid thereinto from the lateral side of the housing.

2. The optical connector according to claim 1, wherein the covering part is fixed to the sleeve by covering an outer periphery of the sleeve with an end of the covering part and fitting a ring thereon and the sleeve is provided at its outer peripheral surface with irregularities.

3. The optical connector according to claim 1 or 2, wherein the sleeve is provided with an insertion through-hole through which the optical fiber strands pass and the insertion through-hole has a diameter which is gradually enlarged toward the insertion direction of the optical fiber strands.
